# EUROPEAN PATENT APPLICATION

(11) **EP 2 423 017 A1**
(43) Date of publication of application: **29.02.2012**
(21) Application number: 11177826.2
(22) Date of filing: 17.08.2011
(51) Int. Cl.: B60H 1/00, B60H 1/14, B60K 11/08

(54) **Drive unit for electric vehicle**

(30) Priority: 31.08.2010 JP 2010193069
(71) Applicant: Hitachi Ltd., Tokyo 100-8280 (JP)
(72) Inventor: Yokoyama, Atsushi, Tokyo, 100-8220 (JP); Osaka, Tadashi, Tokyo, 100-8220 (JP); Imanishi, Yuto, Tokyo, 100-8220 (JP); Sekiya, Sachio, Tokyo, 100-8220 (JP)
(74) Representative: MERH-IP Matias Erny Reichl Hoffmann

(57) **Abstract**

A drive unit for an electric vehicle comprises a device (9, 53, 54, 57) that electrically drives a vehicle, a heat transport means (7B, 31, 41B, 55) for transporting heat absorbed from the device into the vehicle interior air, and a heat-radiation adjusting means (56, 56B, 56C, 61A, 61B, 62, 63, 64) for adjusting heat radiating from the device into the ambient air.

## Description

### [TECHNICAL FIELD]

The present invention relates to a drive unit for an electric vehicle.

### [BACKGROUND ART]

In hybrid electric cars, there is a known system that uses heat generated from heating elements, such as a motor, inverter, and the like, installed in a vehicle for air conditioning (see e.g. patent literature 1). For example, when heating the vehicle interior, cooling water heated by the heating elements flows through a vehicle-interior air-conditioning heat exchanger thereby functioning as a sub heating heat exchanger.

### [CITATION LIST]

### [Patent Literature]

[Patent Literature 1] Japanese Patent No. 4285292

### [SUMMARY OF INVENTION]

### [Technical Problem]

However, conventionally, heating elements, such as a motor, inverter, and the like, are covered by a metallic device housing causing heat to radiate out into the outside air. This configuration uselessly radiates heat generated from the heating elements and thereby fails to efficiently use the heat for heating a vehicle interior.

An object of the present invention is to provide a drive unit for an electric vehicle that can efficiently use heat generated by a device that electrically drives the vehicle for heating a vehicle interior.

### [Solution to Problem]

The present invention is a drive unit for an electric vehicle comprising a device for electrically driving a vehicle and a heat transport means for transporting heat absorbed from the device into the vehicle interior air, wherein a heat-radiation adjusting means is provided for adjusting the amount of heat radiated from the device into the ambient air.

Furthermore, in the drive unit for an electric vehicle, the heat-radiation adjusting means adjusts the amount of heat radiating into the ambient air according to the temperature of the ambient air or the temperature of the vehicle interior air.

Furthermore, in the drive unit for an electric vehicle, the heat-radiation adjusting means suppresses the amount of heat radiating into the ambient air when heating the vehicle interior air.

Furthermore, in the drive unit for an electric vehicle, the heat-radiation adjusting means is configured by a case to ensure an air layer around the device, and the case has a vent hole that can electrically adjust the opening area.

Furthermore, in the drive unit for an electric vehicle, the vent hole enters the open state when electric current is not applied.

Furthermore, in the drive unit for an electric vehicle, the vent hole comprises an inlet side vent hole through which air flows into the inside of the case and an outlet side vent hole through which air flows out; and either the inlet side vent hole or the outlet side vent hole is equipped with an adjustment mechanism that can adjust the amount of ventilation by means of electrical control, and the other vent hole is equipped with an adjustment mechanism that can mechanically change the opening area according to the pressure difference before and after the vent hole.

Furthermore, in the drive unit for an electric vehicle, the heat-radiation adjusting means has a fan for adjusting air that flows into the case.

Furthermore, in the drive unit for an electric vehicle, the devices that electrically drive the vehicle are an electric motor and an inverter for controlling the drive of the electric motor; and the inverter is supported by the electric motor or is supported by the same rigid body as the member that supports the electric motor, and the electric motor and the inverter are covered by the same case.

Furthermore, in the drive unit for an electric vehicle, a drive shaft that transmits the drive torque from the electric motor to the wheels penetrates the case, and the location at which the drive shaft penetrates the case is on the electric motor side of the drive shaft in the longitudinal direction thereof.

Furthermore, in the drive unit for an electric vehicle, a part of the vehicle's body is a part of the case.

### [Advantageous Effects of Invention]

According to the present invention, when heating the vehicle interior air, loss of heat radiating from the device into the ambient air is inhibited, and heat absorbed from the device can be efficiently released into the vehicle interior air; and when not heating the vehicle interior air, heat radiating from the device into the ambient air is increased thereby efficiently cooling the device.

### [BRIEF DESCRIPTION OF DRAWINGS]

FIG. 1 shows a first example of a heat radiation adjustment structure.
FIG. 2 shows a schematic configuration of a drive unit for an electric vehicle according to the present invention and also explains the heating operation.
FIG. 3 shows a schematic configuration of a drive unit for an electric vehicle according to the present invention and also explains the cooling operation.
FIG. 4 shows a schematic configuration of a drive unit for an electric vehicle according to the present invention and also explains the defrosting operation.
FIG. 5 shows a second example of a heat radiation adjustment structure.
FIG. 6A is a perspective view showing a third example of a heat radiation adjustment structure.
FIG. 6B is a side cross-sectional view of an air control valve in the third example of the heat radiation adjustment structure.
FIG. 7 shows a fourth example of a heat radiation adjustment structure.
FIG. 8 shows a fifth example of a heat radiation adjustment structure.

### [DESCRIPTION OF EMBODIMENTS]

Hereafter, a description will be given about an embodiment in which a drive unit for an electric vehicle according to the present invention is applied to an electric car. Herein, the present invention is not limited to electric cars, and it can also be applied to hybrid cars, electric train coaches, or electric construction vehicles. In this embodiment, an alternating current (AC) motor driven by an inverter will be described as an example; however, the present invention is not limited to the AC motor, and it can also be applied to any type of rotating electrical machines (motors and generators) including direct current (DC) motors driven by a converter such as a thyristor Leonard device, or pulse motors driven by a chopper power source.

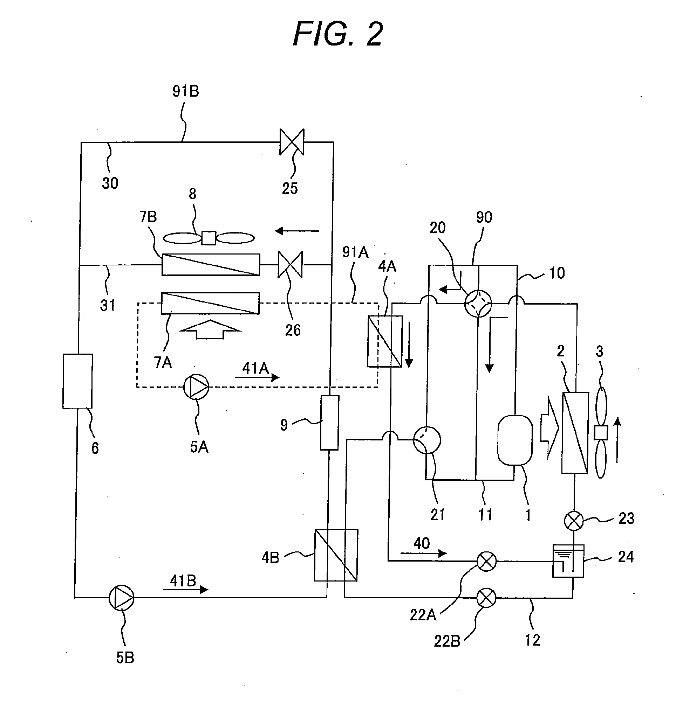

FIG. 2 shows a schematic configuration of a drive unit for an electric vehicle according to the present invention. The drive unit for an electric vehicle shown in FIG. 2 comprises a refrigeration cycle circuit 90 in which a refrigerant 40 flows, an air conditioning circuit 91A that connects an indoor heat exchanger 7A to a refrigeration cycle circuit 90 by means of an air conditioning cooling medium 41A, and a device cooling circuit 91B that connects an indoor heat exchanger 7B, a heating element 9, and a refrigeration cycle circuit 90 by means of a device cooling medium 41B. The heating element 9 is, for example, a motor, inverter, DC/DC converter, decelerator (reduction gear), battery, or a cooling apparatus, which releases driving loss as heat.

The refrigeration cycle circuit 90 is configured such that a compressor 1 for compressing a refrigerant 40, an outdoor heat exchanger 2 for exchanging heat between the refrigerant 40 and the outside air, a liquid pipe 12, and an air conditioning heat exchanger 4A for exchanging heat with the air conditioning cooling medium 41A in the air conditioning circuit 91A are connected in a circle. A four-way valve 20 is provided between a suction pipe 11 and a discharge pipe 10 of the compressor 1. By switching the four-way valve 20, it is possible to connect either the suction pipe 11 or the discharge pipe 10 to the outdoor heat exchanger 2 and connect the other pipe to the air conditioning heat exchanger 4A. FIG. 2 shows the heating operation, wherein the four-way valve 20 connects the discharge pipe 10 to the air conditioning heat exchanger 4A and connects the suction pipe 11 to the outdoor heat exchanger 2.

The cooling heat exchanger 4B conducts the heat exchange between the refrigerant 40 in the refrigeration cycle circuit 90 and the device cooling medium 41B. One end of the cooling heat exchanger 4B on the refrigeration cycle circuit 90 side is connected to the liquid pipe 12, and the other end is switchably connected via a three-way valve 21 to either the discharge pipe 10 or the suction pipe 11 of the compressor 1. The liquid pipe 12 is provided with a receiver 24. Expansion valves 23, 22A, and 22B functioning as flow-rate control means are provided between the receiver 24 on the liquid pipe 12 and the outdoor heat exchanger 2, between the air conditioning heat exchanger 4A and the receiver 24, and between the cooling heat exchanger 4B and the receiver 24, respectively. Furthermore, the outdoor heat exchanger 2 is equipped with an outdoor fan 3 to provide outside air.

The air conditioning circuit 91A is configured such that an indoor heat exchanger 7A for exchanging heat with the air blown into the vehicle interior by the interior fan 8, a circulation pump 5A for circulating the air conditioning cooling medium 41A, and an air conditioning heat exchanger 4A are connected in a circle.

The device cooling circuit 91B is configured such that an indoor heat exchanger 7B for exchanging heat with the air coming through the indoor heat exchanger 7A, a reservoir tank 6, a circulation pump 5B for circulating a device cooling medium 41B, a cooling heat exchanger 4B, and a heating element 9, such as a motor, an inverter, a battery, or the like, are connected in a circle. Furthermore, the device cooling circuit 91B is provided with a bypass circuit 30 for bypassing both ends of the indoor heat exchanger 7B. The bypass circuit 30 is provided with a two-way valve 25; and the main circuit 31 that passes through the indoor heat exchanger 7B is provided with a two-way valve 26. The opening and closing operations of those two-way valves 25 and 26 enables the arbitrary configuration of the flow passage through which the device cooling medium 41B flows.

### (Heating operation)

In this embodiment, when the heating operation is conducted, exhaust heat from the heating element 9 is recovered and is used for heating the vehicle interior. In this case, when the heating load is low, heating is conducted only by exhaust heat from the heating element 9 without using the refrigeration cycle circuit 90; and when exhaust heat from the heating element 9 does not satisfy the heating load, the refrigeration cycle circuit 90 is also simultaneously used.

When heating by means of only exhaust heat from the heating element 9, the circulation pump 5B and the interior fan 8 are activated and the two-way valve 26 is simultaneously opened to direct the device cooling medium 41B into the indoor heat exchanger 7B. Since the device cooling medium 41B has been heated by the heating element 9, radiating heat by the indoor heat exchanger 7B into the air blown into the vehicle interior enables the device cooling medium 41B to be cooled and the air blown into the vehicle interior to be heated.

On the other hand, when exhaust heat from the heating element 9 does not satisfy the heating load, the refrigeration cycle circuit 90 is also simultaneously used. In this case, the four-way valve 20 is switched as indicated by the solid line, the discharge pipe 10 of the compressor 1 is connected to the air conditioning heat exchanger 4A, and the suction pipe 11 is connected to the outdoor heat exchanger 2. Thus, a cycle is created in which the air conditioning heat exchanger 4A functions as a condenser and the outdoor heat exchanger 2 functions as an evaporator.

The refrigerant 40 compressed by the compressor 1 radiates heat into the air conditioning cooling medium 41A by the air conditioning heat exchanger 4A thereby condensing into a liquid. After that, the liquid refrigerant is decompressed by an expansion valve 23 and eventually evaporates and turns into a gas in the outdoor heat exchanger 2 as the result of heat being exchanged with outside air and is returned to the compressor 1. Herein, the expansion valve 22A is fully opened, the expansion valve 22B is fully closed, and the cooling heat exchanger 4B is not used.

The air conditioning cooling medium 41A that has been heated by condensation heat from the refrigerant 40 in the air conditioning heat exchanger 4A by the activated circulation pump 5A flows into the indoor heat exchanger 7A, and radiates heat into the air blown into the vehicle interior in the indoor heat exchanger 7A. In the indoor heat exchanger 7B disposed on the downstream side of the air flow, the air heated by the indoor heat exchanger 7A also receives heat from the device cooling medium 41B heated by the heating element 9, and the warmed air is blown into the vehicle interior.

Thus, the configuration is such that the air blown into the vehicle interior is heated by the refrigeration cycle circuit 90 and then is further heated by exhaust heat discharged from the heating element 9. Therefore, the temperature of air blown from the indoor heat exchanger 7A can remain lower than the temperature of air blown into the vehicle interior from the indoor heat exchanger 7B. That is, it is possible to configure an air conditioning apparatus that consumes less energy for heating by the use of exhaust heat from the heating element 9.

### (Defrosting operation)

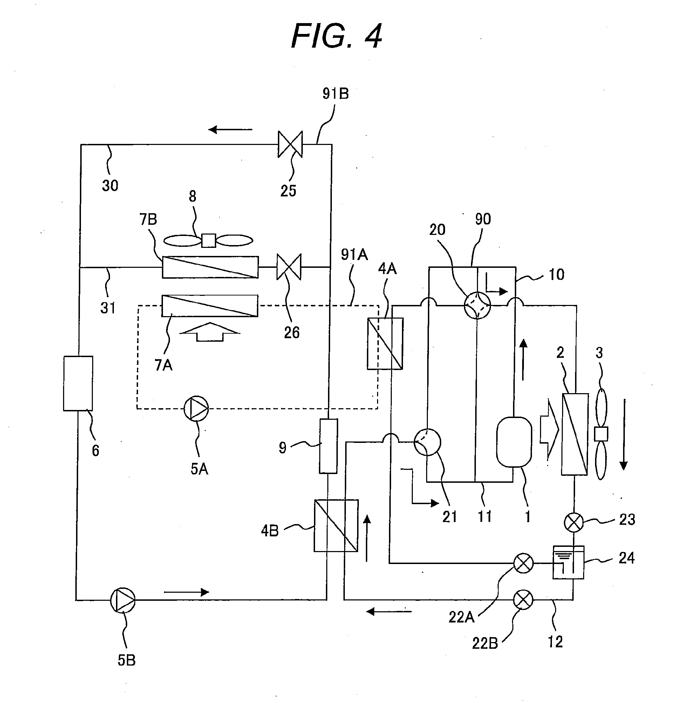

When continuing to operate an outdoor heat exchanger 2 as an evaporator, frost sometimes accumulates on the surface of the heat exchanger, and the defrosting operation is required to eliminate the frost. During the defrosting operation, the four-way valve 20 and the three-way valve 21 are switched as indicated by the solid line in FIG. 4. Further, the expansion valve 22A is fully closed, and a cycle is created in which the outdoor heat exchanger 2 functions as a condenser, and the cooling heat exchanger 4B functions as an evaporator. On the other hand, the two-way valve 26 is closed to shut down the flow to the main circuit 31, and the device cooling medium 41B flows into the bypass circuit 30.

When using the air conditioning heat exchanger 4A as an evaporator, the temperature of the air blown into the vehicle interior tends to be low. Therefore, by the use of exhaust heat discharged from the heating element 9 as a heat source, a drop in temperature in the vehicle interior can be prevented. Furthermore, when using the air blown into the vehicle interior as a heat source, defrosting time may be prolonged due to the insufficient amount of heat. However, since the device cooling medium 41B to which the heating element 9 is connected and which maintains high temperature can be used as a defrosting heat source, a defrosting heat source can be ensured, which reduces the defrosting time. Moreover, by limiting the volume of air circulated by the interior fan 8 or stopping the fan during the defrosting operation, it is possible to inhibit the drop in temperature of the air blown into the vehicle interior.

### (Cooling operation)

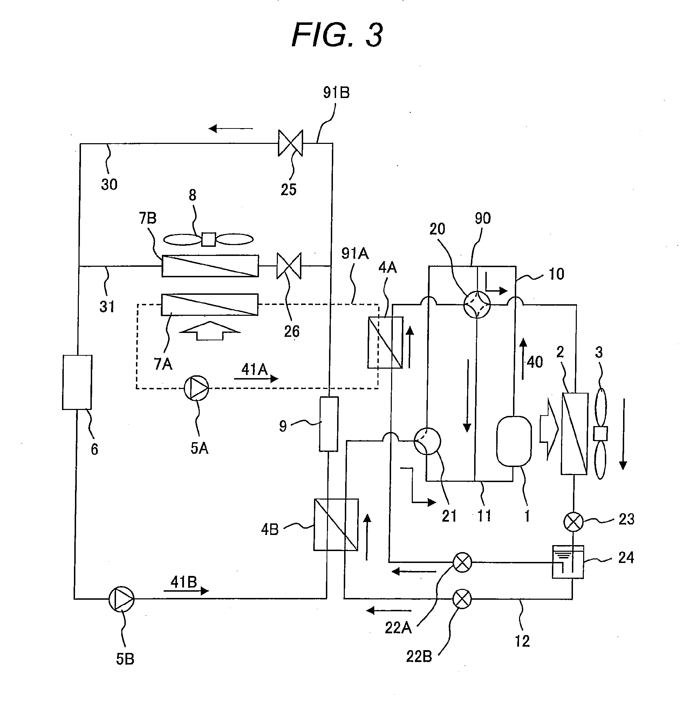

FIG. 3 explains the cooling operation. Herein, the cooling operation is the operation mode in which the outdoor heat exchanger 2 is used as a condenser, and the air conditioning heat exchanger 4A and the cooling heat exchanger 4B are used as evaporators, and both the air conditioning circuit 91A and the device cooling circuit 91B can conduct cooling operations; and the four-way valve 20 is in the state indicated by the solid line.

The refrigerant 40 compressed by the compressor 1 is liquefied by heat radiated by the outdoor heat exchanger 2 and then branched by the receiver 24 into the refrigerant flowing into the air conditioning heat exchanger 4A and the refrigerant flowing into the cooling heat exchanger 4B. The refrigerant flowing into the air conditioning heat exchanger 4A is decompressed by a decompression means (expansion valve 22A) and becomes low temperature and the pressure thereof is reduced, the refrigerant absorbs heat from the air conditioning cooling medium 41A of the air conditioning circuit 91A in the air conditioning heat exchanger 4A, evaporates, and is eventually returned to the compressor 1 via the four-way valve 20. On the other hand, the refrigerant flowing into the cooling heat exchanger 4B is decompressed by a decompression means (expansion valve 22B) and becomes low temperature and the pressure thereof is reduced, the refrigerant absorbs heat from the device cooling medium 41B of the device cooling circuit 91B in the cooling heat exchanger 4B, evaporates, and is eventually returned to the compressor 1 via the three-way valve 21.

Driving the circulation pump 5A provided in the air conditioning circuit 91A will supply the air conditioning cooling medium 41A cooled by the air conditioning heat exchanger 4A to the indoor heat exchanger 7A. Then, driving the interior fan 8 will blow air cooled by means of heat exchanged in the indoor heat exchanger 7A into the vehicle interior. Furthermore, driving the circulation pump 5B provided in the device cooling circuit 91B will cool the device cooling medium 41B heated by the heating element 9 by means of heat exchanged in the cooling heat exchanger 4B. During the cooling operation, the two-way valve 26 of the main circuit 31 is closed and the high-temperature device cooling medium 41B flows through the bypass circuit 30.

Thus, because both the air conditioning heat exchanger 4A and the cooling heat exchanger 4B can be used as evaporators, it is possible to simultaneously realize both the cooling of the vehicle interior and the cooling of the heating element 9. Moreover, because the air conditioning heat exchanger 4A and the cooling heat exchanger 4B are connected in parallel to the suction pipe 11 of the compressor 1, and each refrigerant circuit is provided with an expansion valve 22A, 22B, it is possible to arbitrarily change the flow rate of each refrigerant flowing into the air conditioning heat exchanger 4A and the cooling heat exchanger 4B. As a result, it is possible to control both the temperature of the device cooling medium 41B and the temperature of the air conditioning cooling medium 41A so that desired temperatures can be obtained. Therefore, even when the temperature of the air conditioning cooling medium 41A is sufficiently lowered to conduct cooling, it is possible to keep the temperature of the device cooling medium 41B connected to the heating element 9 high by suppressing the flow rate of the refrigerant flowing into the cooling heat exchanger 4B.

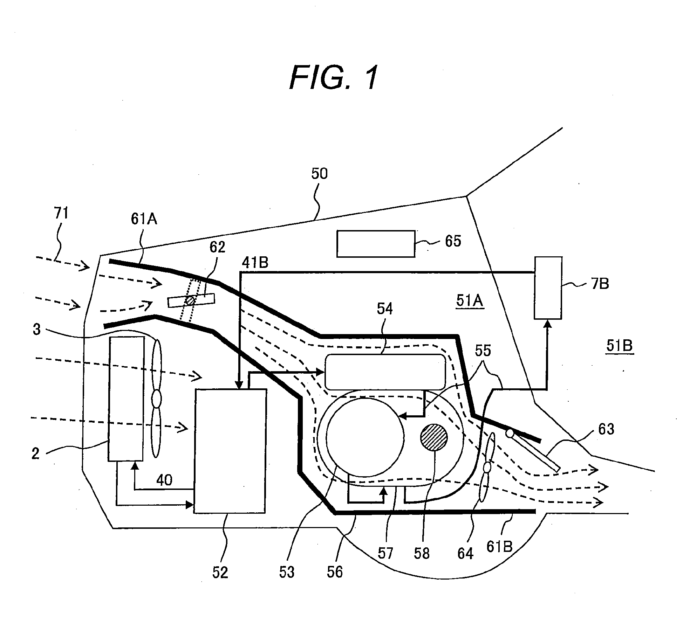

In the device cooling circuit 91B shown in FIG. 1, for example, in winter when outside air temperature is low and the heating operation is conducted, exhaust heat discharged from the heating element 9 is efficiently used for heating. To do so, it is necessary to suppress as much as possible the heat escaping from the high-temperature heating element 9 into the environment and suppress the heat escaping from the refrigerant pipe extending from the heating element 9 to the indoor heat exchanger 7B into the environment. On the other hand, for example, in summer when outside air temperature is high, it is necessary to efficiently release heat from the heating element 9 into the environment so as not to increase temperature of the heating element 9 and to cool the heating element 9. Thus, hereafter, a description will be given about the structure to adjust heat radiating from the heating element 9 and the refrigerant pipe into the environment according to the outside air temperature.

### [First heat radiation adjustment structure]

FIG. 1 shows a first example of a heat radiation adjustment structure, which is applied to an electric car. FIG. 1 is a schematic showing the arrangement of each device when a drive motor 53 is mounted to the front portion of the vehicle's body 50. The space 51A of the vehicle's body 50 corresponds to the engine compartment of a conventional engine car. Hereafter, the space 51A is referred to as a "motor storage room", and the space 51B is referred to as a "vehicle interior".

In each device shown in FIG. 2, other devices except for the indoor heat exchangers 7A and 7B and the interior fan 8 are disposed in the motor storage room 51A in FIG. 1. FIG. 1 illustrates a motor (electric motor) 53 which is the main device, an inverter 54 for controlling the drive of the motor 53, a decelerator 57 for amplifying the torque of the motor 53, a drive shaft 58 for transmitting the torque from the decelerator to the wheels, a cooling unit 52, an outdoor heat exchanger 2, and an outdoor fan 3. The motor 53 and the inverter 54 are supported by the decelerator 57, and the decelerator 57 is a mount structure, not shown, and supported by the vehicle's body 50. Thus, because the inverter 54 is supported by the same rigid body (decelerator 57) as the member that supports the motor 53, the motor 53 and the inverter 54 can be located close to each other; consequently, it is possible to cover the motor 53 and the inverter 54 by the same case, as described later. Therefore, heat radiated into the ambient air can be centrally managed. Furthermore, by enabling the proximal arrangement of the devices, such as the motor 53, inverter 54, and the decelerator, or providing a one-piece casing for them, it is possible to reduce the area of the radiating heat and suppress the heat radiating into the ambient air. Furthermore, the length of the pipe 55 can be shortened, and heat radiating into the ambient air can be inhibited.

The cooling unit 52 includes devices (compressor 1, heat exchangers 4A, 4B, valves 20, 21 etc.) provided in the refrigeration cycle circuit 90 shown in FIG. 2, and also includes circulation pumps 5A, 5B provided in the circuits 91A, 91B. Indoor heat exchangers 7A, 7B and the interior fan 8 shown in FIG. 2 are disposed in the vehicle interior 51B. Herein, FIG. 1 omits the indoor heat exchanger 7A and the interior fan 8. In FIG. 1, the motor 53, inverter 54, and the decelerator 57 correspond to the heating element 9 in FIG. 2, and those devices are connected by means of the pipe 55 through which a device cooling medium 41B flows.

As shown in FIG. 1, the outdoor heat exchanger 2 and the outdoor fan 3 are disposed in the forefront of the motor storage room 51 (left side in the drawing) so that the heat exchange with outside air can be efficiently conducted. The cooling unit 52, motor 53, and the inverter 54 are disposed behind the outdoor heat exchanger 2 and the outdoor fan 3. Generally, the motor 53 and the inverter 54 are structured such that heat radiates into the ambient air by way of the metallic device housing, and heat is released according to the temperature difference between the device housing and the surrounding air, plus the velocity of air flow around the device housing.

If the cooling unit 52, motor 53, inverter 54, and the pipe 55 are disposed behind the outdoor heat exchanger 2, wind 71 caused by the movement of the vehicle or by the outdoor fan 3 passes through the outdoor heat exchanger 2, and then the wind blows into the cooling unit 52, motor 53, inverter 54, and the pipe 55 located behind the heat exchanger. When the cooling unit 52 conducts heating operation by simultaneously using the refrigeration cycle circuit 90, cold wind from the outdoor heat exchanger 2 blows to the devices thereby increasing heat radiating from the devices out into the ambient air. Consequently, the amount of heat that is discharged from the heating element 9 and can be used for heating the vehicle interior will be reduced. On the other hand, when the cooling unit 52 conducts cooling operation, hot air from the outdoor heat exchanger 2 blows to the devices. When conducting cooling operation, the outside air temperature is comparatively high and heat radiating from the heating element 9 into the ambient air needs to be increased; however, hot air may reduce the cooling ability of the heating element 9.

Therefore, in the first structure for reducing heat radiation, the heating elements that include the motor 53, inverter 54, and decelerator 57, and the pipe 55 through which a high-temperature device cooling medium 41B flows are accommodated in the case 56 that enables the adjustment of radiating heat into the ambient air so that the amount of heat radiating from the heating elements into the air in the motor storage room 51A can be adjusted. The case 56 is provided with a vent hole 61A and a vent hole 61B to adjust heat radiating into the ambient air. The vent hole 61A is located at the vehicle's front side of the case 56, and the ambient outside air is directed into the case 56 through the vent hole 61A. The vent hole 61B is located at the vehicle's rear side of the case 56, and air is released from the case 56 through the vent hole 61B.

The vent hole 61A is provided with an adjustment mechanism that can adjust the amount of ventilation by means of electrical control. Adjustment of the amount of ventilation controls the amount of heat radiating from the motor 53, inverter 54, pipe 55, and the decelerator 57 into the air. This ventilation adjustment mechanism is, for example, an air control valve 62 that can electrically control the angle. When suppressing the incoming and outgoing of air between the case 56 and the ambient environment, control is made so as to close the air control valve 62; and when increasing the incoming and outgoing of air, control is made so as to open the air control valve 62. The air control valve 62 is rotatably supported by a spring or the like so that the valve opens when the drive current is not applied. A specific example of the structure of the air control valve 62 can be a throttle valve of an engine, or an electrical shutter used for the ventilator for the building.

The vent hole 61A is a duct-shape as shown in FIG. 1 and is designed to direct air from the front of the vehicle apart from the heating element 9. This configuration enables comparatively low-temperature air to be directed from the outside of the motor storage room 51A, thereby efficiently cooling the heating element 9.

The vent hole 61B is provided with an aperture adjustment mechanism that can mechanically change the opening area according to the pressure difference at the port of the vent hole 61B. The aperture adjustment mechanism is, for example, an air-pressure type shutter 63, which opens when the air pressure in the case 56 becomes higher than the ambient outside air pressure and releases air from the case 56. Thus, by providing either one vent hole of the case 56 with an aperture adjustment mechanism that can mechanically open and close according to the pressure difference before and after the vent hole, there is no need for installing a new air control valve 62, thereby making it possible to provide a simple heat-radiation adjusting means.

The case 56 is further provided with a blast fan 64 to control the pressure transportation of the air directed to the case 56. The number of revolutions of the blast fan 64 is controlled according to the amount of heat to be radiated into the outside air from the motor 53 and the inverter 54 or according to the amount of heat to be recovered for heating.

The control apparatus 65 is electrically connected by electric cables, not shown, to the cooling unit 52, inverter 54, air control valve 62, and the blast fan 64. This control apparatus 65 calculates the volume of air to be flown through the vent hole 61A and the vent hole 61B based on the drive state of the cooling unit 52, motor 53, and the inverter 54 as well as based on the information such as the vehicle speed, ambient air temperature, the vehicle interior air temperature, and so on, thereby controlling the drive state of the air control valve 62 and the blast fan 64.

When ambient air temperature is low and the vehicle interior air temperature needs to be increased, or when an operator has started the heating operation, the control apparatus 65 starts the heating operation of the cooling unit 52. During the heating operation, exhaust heat discharged from the heating element 9 is recovered as stated above and used for heating the vehicle interior. To suppress heat radiating from the heating element 9 into the ambient air and utilize as much heat as possible for indoor heating, the control apparatus 65 closes the air control valve 62 and stops or reduces the rotation of the blast fan 64. By doing so, heat transportation from the air in the case 56 into the air in the motor storage room 51A is limited to heat conduction via the case 56, and the motor 53, inverter 54, pipe 55, and the decelerator 57 are not always exposed to the traveling wind 71; thus, heat radiating into the ambient air can be suppressed. Accordingly, it is possible to increase the amount of heat that can be recovered from the heating element 9 during the heating operation, which results in the reduction of power consumed by heating.

When ambient air temperature is high and the vehicle interior air temperature needs to be decreased, or when an operator has started cooling operation, the control apparatus 65 starts cooling the cooling unit 52. During the cooling operation, there is no need for using exhaust heat discharged from the heating element 9 for heating. However, when ambient air temperature is high, it is necessary to efficiently cool the heating element 9 by utilizing traveling wind 71 and heat radiating into the ambient air. Therefore, to increase heat radiating from the heating element 9 into the ambient air and suppress power of the cooling unit 52 consumed by cooling the devices, the control apparatus 65 opens the air control valve 62 and rotates the blast fan 64. Rotation speed of the blast fan 64 can be changed according to the amount of heat to be radiated into the ambient air. By doing so, air flows through the case 56, heat radiating from the motor 53, inverter 54, pipe 55, and the decelerator 57 into the ambient air can be effectively increased. Accordingly, it is possible to efficiently cool the heating element 9 during the cooling operation, which results in the reduction of power consumed by cooling the vehicle interior and the devices.

When outside air temperature is optimum for an operator and adjustment of the vehicle interior air temperature is not necessary, the control apparatus 65 controls the drive of the air control valve 62 and the blast fan 64 according to the condition of the heating element 9. When heat radiating from the heating element 9 into the air is not necessarily suppressed, the air control valve 62 enters the open state (no application of current) and the blast fan 64 stops operating; thus, the device cooling ability as natural air cooling can be ensured while suppressing the power consumed by the air control valve 62 and the blast fan 64.

Furthermore, since the air control valve 62 has a mechanism to enter the open-valve state when current is not applied (normal open), even if an electrical failure occurs to the control apparatus 65 or the air control valve 62, heat radiating from the heating element 9 into the ambient air can be ensured. Although the amount of generated heat that can be used for heating decreases in this state, it is possible to avoid the deterioration of travel performance due to an excessive increase in temperature of the heating element 9.

On the other hand, even when the vehicle interior air temperature does not have to be adjusted, but lubrication oil temperature of the decelerator 57 needs to be efficiently increased to reduce the gear loss of the decelerator 57, the air control valve 62 is closed and the blast fan 64 is controlled to enter the stop state. By doing so, it is possible to suppress the amount of heat radiating from the decelerator 57 into the ambient air, which makes it possible to increase lubrication oil temperature of the decelerator 57 in a short time.

By providing a case 56 that can adjust the volume of internal air flow, it is possible to adjust heat radiating from the heating element 9 and the refrigerant pipe into the environment according to the outside air temperature and so on.

It is desirable that the material of the case 56 is excellent in the heat insulation properties; however, the material can be a metal. Furthermore, by providing a double wall for the case 56, a metal material can have sufficient heat insulation effects.

In FIG. 1, a cooling unit 52 provided with a refrigeration cycle circuit 90 is a component to realize the function to heat the vehicle interior; however, the heating means can be configured from a radiator, water pump, and an indoor heat exchanger (heater core) that have been commonly used in conventional gasoline engine cars, and the like. That is, due to the effects of the case 56, water temperature of the heater is increased during the heating operation, and when heating is not necessary, heat radiating into the ambient air can be increased.

Furthermore, in FIG. 1, the motor 53, inverter 54, pipe 55 and the decelerator 57 are accommodated in one case 56; however, each device can be individually enclosed by a case made of heat insulation material. Furthermore, the cooling unit 52 and heat generating devices, such as DC/DC converter (not shown) and a battery charger (not shown), can be accommodated in a case that has the same function as the case 56.

### [Second heat radiation adjustment structure]

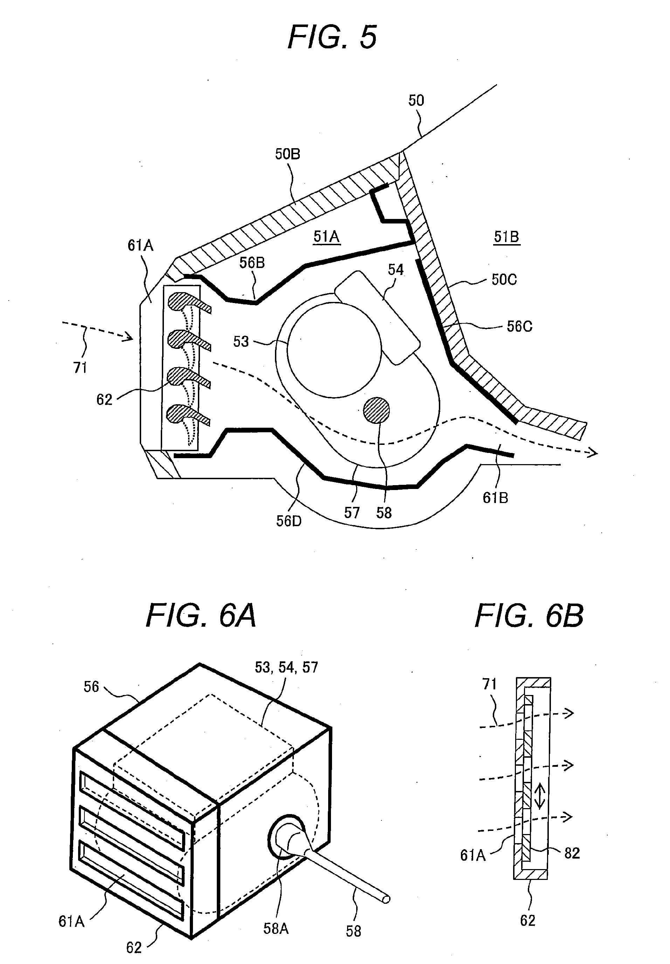

FIG. 5 shows a second example of a heat radiation adjustment structure, and it shows the application to an electric car in the same manner as the first example in FIG. 1. Herein, the same configuration and operation as the first example in FIG. 1 will be omitted.

In FIG. 5, a part of the case 56 is shared by a part of the vehicle's body 50. A case member 56B is disposed at the bottom surface of the hood 50B of the vehicle's body so that it can be configured as one member of the case 56. Furthermore, the bulkhead 50C between the motor storage room 51A and the vehicle interior 51B is also configured as one member of the case 56 (case member 56C). The case member 56C is composed of a bulkhead 50C and heat insulation material bonded thereto. Furthermore, a case cover 56D having excellent heat insulation properties is installed at the bottom surface of the heating element 9. The case 56 is composed of those case members 56B, 56C, and the case cover 56D. By thus sharing a part of the case 56 by a part of the vehicle's body 50, it is possible to configure the structure with a comparatively simple-shape case member and a cover without making a complicated shape by tracing the uneven shapes of the heating element. Consequently, it is possible to realize a low-cost drive unit. Furthermore, if a part of the case 56 can be shared by a part of the vehicle's body 50, it is possible to reduce the weight of the case member mounted to the heating element. Moreover, since case members 56B, 56C mounted to the vehicle's body 50 are not easily affected by vibration of the motor or the decelerator, it is possible to configure a highly reliable case 56.

The air control valve 62 in FIG. 5 can change the amount of ventilation by the rotation of the multistage flap. By doing so, a larger opening area of the vent hole 61A can be ensured, which enables the heating element 9 to be more efficiently cooled by a larger amount of air. Furthermore, the flap of the air control valve 62 is structured such that when a pressure is applied from the front of the vehicle, the flap rotates so that it can open. By doing so, even if an electrical failure occurs to the control apparatus 65 or the air control valve 62, heat radiating from the heating element 9 into the ambient air can be ensured during traveling. In this state, although the amount of generated heat that can be used for heating decreases, it is possible to avoid the deterioration of travel performance due to an excessive increase in temperature of the heating element 9.

### [Third heat radiation adjustment structure]

FIG. 6A and FIG. 6B show a third example of a heat radiation adjustment structure. Herein, the same configuration and operation as the previously shown structural examples will be omitted.

In FIG. 6A and FIG. 6B, a plurality of slit-like vent holes 61A are disposed, and there is provided a slide valve 82 for controlling the opening and closing of the slits. The air control valve 62 is composed of a member in which the slits are formed and a slide valve 82. This configuration ensures a large opening area of the vent hole 61A, which enables the heating element 9 to be more efficiently cooled by a larger amount of air. Furthermore, since pressure of passing air does not easily act on the direction in which the slide valve 82 operates (vertical direction in FIG. 6B), it is possible to drive the slide valve 82 by a comparatively small motivity. Moreover, in this example, a description was given about the structure in which the slide valve 82 translates; however, the slide valve 82 may rotate.

In FIG. 6A, the motor 53, inverter 54, and the decelerator 57 share the metal case, thereby forming an integrated structure. This means that the inverter 54 is supported by the motor 53 and the decelerator 57, or the inverter is supported by the same rigid body as the member that supports the motor 53; and the motor and the inverter are covered by the same case. This configuration realizes a small case 56 for heat insulation, thereby providing a small drive unit.

Furthermore, in FIG. 6A, with respect to the longitudinal direction of the drive shaft, the drive shaft 58 penetrates the case 56 on the motor side (decelerator side) 58A thereof and not on the wheel side. The drive shaft 58 significantly oscillates on the wheel side thereof due to vibration of the wheels and steering of the wheels. That is, the oscillation range of the drive shaft 58 on the decelerator side 58A is comparatively small. Therefore, by the drive shaft 58 penetrating the case 56 at a location close to the decelerator side 58A rather than at the center of the longitudinal direction of the drive shaft, the hole in the case 56 through which the drive shaft penetrates can be made small, thereby making it possible to provide a case 56 having high heat insulation performance. That is, by making a through hole in the case 56 small, it is possible to suppress the amount of air leakage as well as suppressing heat radiating from the case 56.

### [Fourth heat radiation adjustment structure]

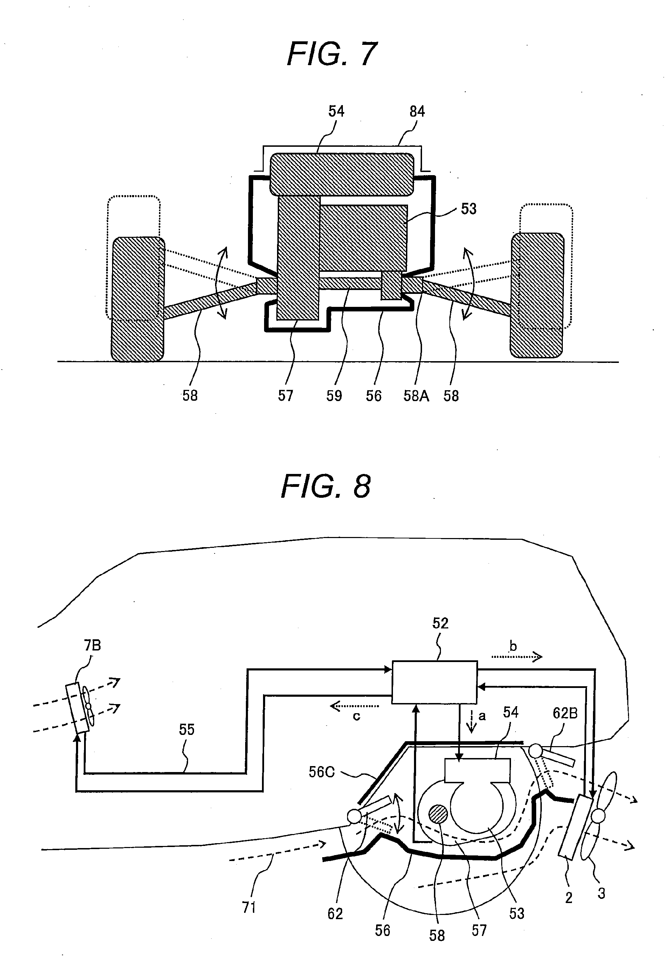

FIG. 7 shows a fourth example of a heat radiation adjustment structure. FIG. 7 is a view of the drive unit seen from the front of the vehicle. Herein, the same configuration and operation as the previously shown structural examples will be omitted.

In the same manner as the third example shown in FIGS. 6A and 6B, in FIG. 7, with respect to the longitudinal direction of the drive shaft, the drive shaft 58 penetrates the case 56 on the motor side (decelerator side) 58A thereof and not on the wheel side. Although the drive shaft 58 oscillates due to vibration of the wheels and steering of the wheels, the oscillation of the drive shaft 58 on the decelerator side 58 thereof is comparatively small. Therefore, by the drive shaft 58 penetrating the case 56 on the decelerator side 58 thereof, the hole in the case 56 through which the drive shaft penetrates can be made small, thereby making it possible to provide a case 56 having high heat insulation performance. That is, by making a through hole in the case 56 small, it is possible to suppress the amount of air leakage as well as suppressing heat radiating from the case 56.

In FIG. 7, the case 56 covers only the lower part of the inverter 54 instead of covering the entire inverter 54. Furthermore, the upper part of the inverter 54 is covered by a heat insulation cover 84 having an excellent heat insulation properties. If the lower part of the inverter 54 radiates more heat than other portion of the inverter 54, by covering only the lower part of the inverter 54 by the case 56 as stated above, it is possible to recover the sufficient amount of heat from the heating element 9 and reduce the power consumed by the heating operation. Furthermore, by covering the upper part of the inverter 54 by a heat insulation cover 84 having excellent heat insulation properties, it is possible to suppress heat radiating from the upper part of the inverter 54 although the amount of heat is comparatively small. In this case, if the amount of heat radiating from the upper part of the inverter 54 is small, it is possible to sufficiently cool the entire inverter 54 without requiring the adjustment of heat radiating from the upper part of the inverter 54 by using a heat-radiation adjusting means.

### [Fifth structure for reducing heat radiation]

FIG. 8 shows a fifth example of a heat radiation adjustment structure.

FIG. 8 shows an example in which the drive unit is installed on the rear wheel shaft of the vehicle. Furthermore, in the example shown in FIG. 8, a cooling unit 52 equipped with a refrigeration cycle circuit 90 is not used as a component, but the heating means is composed of an outdoor heat exchanger (radiator) 2, an outdoor fan 3, a water pump, and an indoor heat exchanger (heater core) 7B. The cooling unit 52 is equipped with a control valve for switching the water pump and the flow passage.

The cooling unit 52 usually circulates cooling water to the heating element 9 and the radiators (the outdoor heat exchanger 2 and the outdoor fan 3) (a-direction and b-direction in FIG. 8). When conducting the heating operation, the c-direction flow passage in FIG. 8 is also made conductive, and heat from the heating element 9 is supplied to the vehicle interior via the indoor heat exchanger 7B. When cooling water temperature is too low to require cooling by the radiators (the outdoor heat exchanger 2 and the outdoor fan 3), circulation to the radiators (the outdoor heat exchanger 2 and the outdoor fan 3) is shut down, and the cooling water is circulated between the heating element 9 and the indoor heat exchanger 7B (a-direction and c-direction in FIG. 8).

In the same manner as the case in FIG. 5, a part of the case 56 shown in FIG. 8 is also shared by a part of the vehicle's body 50; therefore, it is possible to make a case member mounted to the heating elements light. Furthermore, the volume of air generated by driving the radiator fan 3 is simultaneously used as the volume of air generated by driving a blast fan 64 of the case 56. By doing so, it is possible to reduce the number of fans, which can realize a small low-cost drive unit.

As stated above, a drive unit for an electric vehicle according to the embodiments is equipped with a device cooling circuit 91B that circulates a device cooling medium 41B between the motor 53 which is a device for electrically driving the vehicle, the inverter 54, and the indoor heat exchanger 7B, and releases the heat absorbed from the devices into the vehicle interior air in the indoor heat exchanger 7B. As a heat-radiation adjusting means for suppressing heat radiating from the devices into the ambient air, the drive unit for an electric vehicle according to the embodiments is equipped with a case 56 made of a heat insulation material that covers the devices and can adjust the volume of air.

By providing such a heat-radiation adjusting means, when heating the vehicle interior air, heat radiating from the devices into the ambient air can be inhibited and heat absorbed from the devices can be efficiently released into the vehicle interior air; and when not heating the vehicle interior air, heat radiating from the devices into the ambient air is increased and cooling of the devices can be efficiently conducted.

Each of the above-mentioned embodiments can be used individually or can be used in combination because effects of each embodiment can be utilized individually or synergistically. Furthermore, as long as the characteristics of the present invention are not detracted, the present invention is not limited to the above embodiments.

## Claims

1. A drive unit for an electric vehicle comprising:
a device (9, 53, 54, 57) for electrically driving a vehicle;
a heat transport means (7B, 31, 41B, 55) for transporting heat absorbed from the device into the vehicle interior air; and
a heat-radiation adjusting means (56, 56B, 56C, 61A, 61B, 62, 63, 64) for adjusting the amount of heat radiated from the device (9, 53, 54, 57) into the ambient air.

2. The drive unit for an electric vehicle according to claim 1, wherein the heat-radiation adjusting means adjusts the amount of heat radiating into the ambient air according to the temperature of the ambient air or the temperature of the vehicle interior air.

3. The drive unit for an electric vehicle according to claim 2, wherein the heat-radiation adjusting means suppresses the amount of heat radiating into the ambient air when heating the vehicle interior air.

4. The drive unit for an electric vehicle according to claim 1, wherein the heat-radiation adjusting means is configured by a case (56) to ensure an air layer around the device, and the case has a vent hole (61A) the opening area of which is electrically adjustable.

5. The drive unit for an electric vehicle according to claim 4, wherein the vent hole (61A) enters the open state when electric current is not applied.

6. The drive unit for an electric vehicle according to claim 1, wherein the heat-radiation adjusting means is configured by a case (56) to ensure an air layer around the device, and the case (56) has a vent hole (61A), and the vent hole (61A) comprises an inlet side vent hole through which air flows into the inside of the case and an outlet side vent hole through which air flows out; and either the inlet side vent hole or the outlet side vent hole is equipped with an adjustment mechanism to adjust the amount of ventilation by means of electrical control, and the other vent hole is equipped with an adjustment mechanism to change the opening area mechanically according to the pressure difference before and after the other vent hole.

7. The drive unit for an electric vehicle according to claim 1, wherein the heat-radiation adjusting means is configured by a case (56) to ensure an air layer around the device; and the heat-radiation adjusting means has a fan (64) for adjusting air that flows into the case (56).

8. The drive unit for an electric vehicle according to claim 4, wherein the devices for electrically driving the vehicle are an electric motor (53) and an inverter (54) for controlling the drive of the electric motor (53); and the inverter (54) is supported by the electric motor (53) or is supported by the same rigid body as the member that supports the electric motor (53), and both the electric motor (53) and the inverter (54) are covered by the case (56).

9. The drive unit for an electric vehicle according to claim 1, wherein a drive shaft (58) for transmitting the drive torque from the electric motor (53) to wheels of the electric vehicle penetrates the case (56), and the location at which the drive shaft (58) penetrates the case (56) is on the electric motor side of the drive shaft (58) in the longitudinal direction thereof.

10. The drive unit for an electric vehicle according to claim 1, wherein a part of the vehicle's body is a part of the case (56).
